# EUROPEAN PATENT SPECIFICATION

(11) **EP 1 918 845 B1**
(45) Date of publication and mention of the grant of the patent: **16.01.2013**
(21) Application number: 07117897.4
(22) Date of filing: 04.10.2007
(51) Int. Cl.: G06F 21/31

(54) **Multiple security access mechanisms for a single identifier**
Mehrfacher Sicherheitszugangsmechanismus für einen Einzelidentifikator
Mécanismes d'accès sécurisés multiples pour identificateur unique

(30) Priority: 31.10.2006 US 590360
(43) Date of publication of application: 07.05.2008
(73) Proprietor: EMC Corporation, Hopkinton, MA 01748 (US)
(72) Inventor: Morris, Cameron Craig, Saratoga Springs, UT 84043 (US); Burch, Lloyd Leon, Payson, UT 84651 (US); Earl, Douglas G., Orem, UT 84097 (US)
(74) Representative: Hanna, Peter William Derek

(56) References cited:
- WO-A-01/91033
- WO-A-02/057933
- WO-A-03/062969

## Description

### Field

The invention relates generally to security and more particularly to techniques for multiple security access mechanisms for a single identifier.

### Background

Increasingly, enterprises are streamlining operations in efforts to become more competitive and efficient. Consequently, it is not uncommon for a single individual within an enterprise to have a variety of different jobs or titles. Each job or title may entail different electronic access rights to the assets of the enterprise. Usually, this means that the security system for the enterprise maintains separate accounts for each different job or title associated with a multifaceted employee.

Each account within the security system may require an employee to supply a unique id and password combination. This id-password pair is then used to authenticate the employee for a particular job or to a particular title within the enterprise. The authentication also provides access permissions to defined assets of the enterprise in response to the authenticated job or title of the employee, which is resolved by the id-password pair initially supplied by the employee when the employee logs into the enterprise's security system.

Some jobs or titles may require a stronger level of authentication than other jobs or titles within the enterprise. For example, an employee logging in as a teller at a bank's security system may need a teller id and a password, which is eight characters in length having no further password format restrictions. However, the same employee logging in as a bank treasurer may need a different user id from that which was used with the teller log in and may need a different password, which is still eight characters in length, but also requires that at least one character be uppercased, at least one character be a number, and at least one character a punctuation character. Typically, the software authentication used with the teller log in is different from that which is used with the treasurer log in, because the formats and authentication of the passwords are different; namely stronger with the treasurer scenario. This may mean that the bank has to maintain different hardware configurations, different databases, and different authentication services entirely from that which is used for the tellers vis-à-vis the executives. In some cases, this may even be dictated by federal or state regulations for certain industries, such as the financial industry.

As another example, where a similar authentication technique may be used for different jobs but be maintained separately, consider a police office that works for a particular city. During off hours from being a police officer, the police officer may work for the city as a 911 emergency operator. The city charter may not permit a police officer to view certain information associated with a 911 operator and vice versa. Thus, the city maintains two entirely separate systems and databases that permit the officer to log in with a police id and password to the police system and that permit the officer to log in with a 911 id and password to the 911 emergency services system.

What becomes readily apparent from the above examples is that the enterprise, which include employees that can assume multiple jobs or titles, or enterprises, which have entirely separate business operations (such as the city with the police and 911 emergency center), have to maintain multiple systems and multiple accounts within their security systems. This poses significant maintenance and support issues for the enterprise and can also be quite costly.

In addition, from a user perspective it can become a challenging task to remember multiple different ids and security systems. In some cases, users may even resort to writing the information down on cards or sticky notes placed around access machines. This could even pose greater security risks for the enterprises if these notes are discovered by nefarious individuals seeking to gain unauthorized access to the assets of the enterprises.

It is apparent that although reducing staff and increasing job responsibilities may have saved some money for an enterprise, it has also raised expenses elsewhere within the enterprise and has posed additional security risks.

Thus, what is needed is a mechanism, which allows for more flexible and streamlined management of an enterprise's security system.

### Summary

The present invention provides techniques for multiple security access mechanisms for a single identifier in accordance with claims which follow. More specifically, and in an embodiment, a computer-implemented method is presented for multiple security accesses mechanisms for a principal. A first authentication secret associated with a principal is received. The first authentication secret is validated from a plurality of assigned authentication secrets, which are associated with the principal. One or more attributes are acquired in response to their association with the validated first authentication secret and an access credential is transmitted along with the one or more attributes in response to the validated first authentication secret.

### Brief Description of the Drawings

FIG. 1 is a diagram of a method for multiple security access mechanisms for a single principal, according to an example embodiment.

FIG. 2 is a diagram of a method for resolving identities for a principal using a single identifier and one or more multiple passwords associated with the single identifier, according to an example embodiment.

FIG. 3 is a diagram of a security access system, according to an example embodiment.

FIG. 4 is a diagram of another security access system, according to an example embodiment.

### Detailed Description

A "resource" includes a user, content, a processing device, a node, a service, an application, a system, a principal, a directory, a data store, groups of users, combinations of these things, *etc.* A "principal" is a type of resource that engages in a communication session with one or more other resources for purposes of gaining access to those resources. The resources that the principal seeks to access may also have their own and sub resources. In an embodiment, a "principal" may be viewed as a user or as an automated application or service. The terms "service" and "application" may be used interchangeably herein and refer to a type of software resource that includes instructions, which when executed by a machine performs operations that change the state of the machine and that may produce output to drive the processing of other machines or resources.

A resource is recognized via an "identity." An identity is authenticated via various techniques *(e.g.,* challenge and response interaction, cookies, assertions, *etc.)* that use various identifying information (e.g., identifiers with passwords, biometric data, hardware specific data, digital certificates, digital signatures, *etc.*)*.* A "true identity" is one that is unique to a resource across any context that the resource may engage in over a network (e.g., Internet, Intranet, *etc.).* However, each resource may have and manage a variety of identities, where each of these identities may only be unique within a given context (given service interaction, given processing environment, given communication session, *etc.).*

An identity for a principal is at least partially resolved via an authentication technique in which the principal supplies or is identified by a single identifier and one or more authentication secrets (e.g., passwords, biometric data, digital signatures, digital certificates, *etc.).*

An "identifier" may be viewed as a principal name or principal ID that the principal may assume for any given context. In an embodiment, a principal has a single identifier and multiple authentication secrets that can be used with that single identifier. In another embodiment, the principal has multiple identifiers, and any given identifier can be used with each of the principal's available authentication secrets.

The principal's identity for any given context is resolved by authentication techniques that engage an identity service. The identity service uses a single supplied identifier and one or more of multiple available authentication secrets to resolve a particular identity for the principal in a given context.

The identity may also be a special type of identity that the resource assumes for a given context. For example, the identity may be a "crafted identity" or a "semantic identity." An example for creating and using crafted identities may be found in our European Patent Application No. 1,773,020. An example for creating and using semantic identities may be found in our European Patent Application No. 1,780,648.

An "identity service" refers to a special type of service that is designed to manage and supply authentication services and authentication information for resources. So, an identity service may authenticate a given principal for access to a variety of local and external resources known to that identity service. In addition the identity service itself may be viewed as a type of resource. In this manner, identity service may authenticate and establish trust with one another viewing one another as specific type of resource. An identity service may also enlist the assistance of other resources or services to perform any given authentication on a principal.
Examples of an identity service can be found in our European Patent Application Nos. 1,560,394-A (" Techniques for Dynamically Establishing and Managing Authentication and Trust Relationships"), 1,560,100-A (" Techniques for Establishing and Managing a Distributed Credential Store"), and 1,562,100-A (" Techniques for Dynamically Establishing and Managing Trust Relationships").

An identity service may also provide single sign-on services to a resource. That is, a resource may sign-on to an identity service and acquire identities and credentials to access a variety of other services or resources. In some cases, the identity service is modified or enhanced to perform some of the teachings presented herein and below.

For any particular resolved identity, a variety of other attributes may be assigned by the identity service or other services or resources that the identity service uses. That is, when the principal desires access to a resource or engages in a communication session with that resource, the access or session may require or may beneficially utilize other information beyond just the identity associated with the principal. Some example attributes or attribute types may include, by way of example only and not by way of limitation, a role that may define access rights and permissions, an employee number, an address, a phone number, a credit card number, income, social security number, *etc.*

Policy may drive in any given context and for any given identity what attributes are made available for a given access or communication session of the principal with a given resource. Moreover, a single principal may have the same type of attributes, such that a given type is selected depending upon the context. For example, a principal may have multiple addresses or phone numbers, where any given address or phone number is set depending on the context detected and the policy applied.

Various embodiments of this invention can be implemented in existing network architectures, security systems, data centers, and/or communication devices. For example, in some embodiments, the techniques presented herein are implemented in whole or in part in the Novell® Access Manager® product, proxy server products, email products, operating system products, data center products, and/or directory services products distributed by Novell®, Inc., of Provo, Utah.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

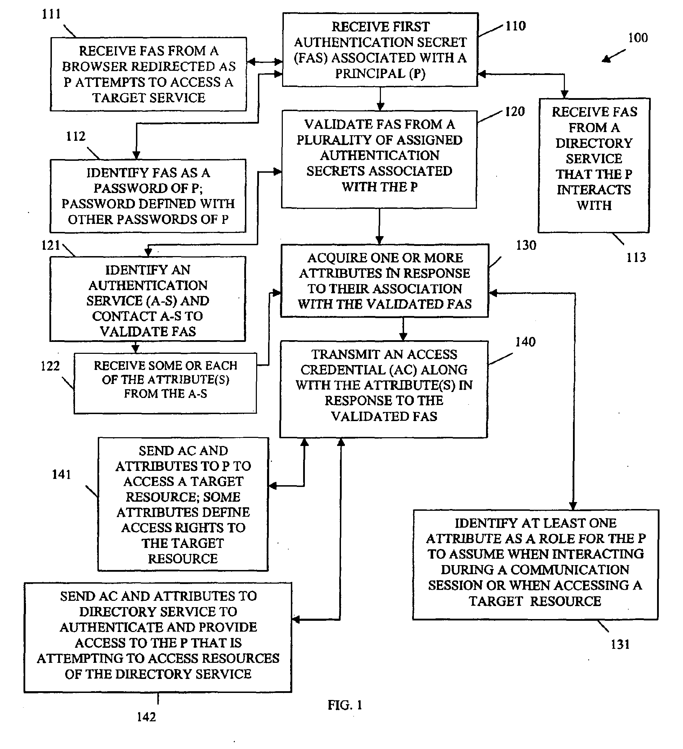

It is within this context, that various embodiments of the invention are now presented with reference to the FIGS. 1-4.

FIG. 1 is a diagram of a method 100 for multiple security access mechanisms for a single principal, according to an example embodiment. The method 100 (hereinafter "identity service") is implemented as instructions in a machine-accessible and readable medium. The instructions when executed by a machine perform the processing depicted in FIG. 1. The identity service is also operational over and processes within a network. The network may be wired, wireless, or a combination of wired and wireless.

Initially, at 110, the identity service receives a first authentication secret associated with a principal. The first authentication secret is accompanied by an identifier that is also associated with the principal. Receipt of the first authentication secret and the identifier is provided so that the identity service can authenticate the principal for access to a desired service or resource. It is noted, that the identifier received is associated with more than one authentication secret and the principal may select which particular authentication to use in any desired context.

According to an embodiment, at 111, the receipt of the first authentication secret and the identifier may come from a browser service, such as a World-Wide Web (WWW) browser connected to the Internet. The principal may have been attempting to access a target service via the browser. The target service does not recognize the principal attempting to access it and forces the browser to redirect to the identity service. At this time, the identity service requests the identifier and authentication secret from the principal via the browser. Assuming authentication is achieved in processing described more completely below, the identity service supplies back at least an access credential via the browser that the principal presents back to the target service to gain authenticated access to the target service and any of its resources.

In another embodiment, at 112, the identity service may recognize the authentication secret as a password. The identifier associated with the principal can use a plurality or multiple passwords and the principal selects which one to provide. The different passwords may be of different strengths, lengths, *etc.* Depending upon the password used, the principal will assume a particular role or even identity, which can be defined within or with the access credential, discussed below.

In still another situation, at 113, the first authentication secret may be directly received from a directory service and not from the principal. In this case, the directory service may be unaware of the identity service, such as when the directory service is interfaced to a proxy or when a plug-in module provides an interface to the identity service. In another case, the directory service may be configured and aware of the identity service. When the directory service knowingly or unknowingly supplies the identifier to the identity service on behalf of the principal, it occurs because the principal attempted to log in or gain access to resources of the directory service and the directory service was not able to independently authenticate the principal with the identifier and authentication secret supplied. The directory service then enlists the services of the identity service to perform authentication on its behalf.

In fact, the authentication secret and identifier for the principal may come directly from the principal, from a proxy, from a browser the principal is using (as discussed above), or from any service or resource that the principal attempts to authenticate to or gain access to (such as via the directory service example discussed above).

Once the authentication secret and the identifier are acquired, the identity service attempts to validate it from a plurality of assigned and available authentication secrets associated with the principal. This may entail looking up the authentication secret in a trusted store; it may entail hashing the authentication secret to a particular value and looking for a match in the trusted store; it may entail hashing both the authentication secret and the identifier combination and looking for a match in the trusted data store; or it may entail consulting an external authentication or external directory service to authenticate the principal on behalf of the identity service.

For example, in one case, at 121, the identity service may use policy to decide that the authentication is to be performed externally or may decide that it cannot perform the authentication on its own accord. In such a case, the identity service may identify a specific or particular authentication service to enlist assistance from via policy or via a lookup in a trusted data store by using the authentication secret initially received. The identity service then contacts that external authentication service and supplies it with the authentication secret and the identifier.

In some cases, by policy, the identity service may supply the external authentication service with the authentication secret and with an entirely different identifier for the principal then the one initially received. This may be useful when the external authentication service expects a certain or specific identifier-secret pair, and the identity service resolves the supplied principal identifier to the identifier that the principal needs to authenticate with the external authentication service. The authentication secret remains the same in this scenario. At 122, the authentication service or perhaps a different service may also be consulted by the identity service to acquire some or each of the attributes that may also be relevant to the authentication (this is discussed below with reference to the processing at 130).

At 130, the identity service also acquires one or more attributes in response to their association by policy to the now validated first authentication secret. It is noted that at any time when the first authentication secret is not capable of being validated that the processing stops and exception, reporting, and/or error processing may be initiated.

The attributes may include a variety of useful information that the principal may use when contacting the target or desired resource or service that it is trying to access. In fact, the attributes are available for an entire communication session that the principal may have with the target resource or service. Example attributes were discussed above. At least some attributes may define access rights or roles for the principal during the communication session with the target resource or service. Again, at 122, some or all of the attributes may be acquired externally via another service that the identity service enlists for assistance.

According to an embodiment, at 131, the identity service may identify at least one attribute that represents a role for the principal to assume when interacting during a communication session or when accessing a target resource. The role, by policy, may define access rights and privileges for the principal during the communication session with the target resource.

At 140, the identity service transmits an access credential along with the acquired attributes in response to the validated first authentication secret. The access credential provides the authentication and access that the principal has to have to access the desired or targeted resource or service, which the principal is attempting to communicate with or engage in a communication session. When presented to the target resource or service, the access credential authenticates the principal for a particular role (type of attribute) having particular access rights and privileges.

Similar to how the identifier and the first authentication secret were initially received; the identity service may transmit or inject the access credential and attributes to a variety of resources. For example, at 141, the access credential and the attributes may be sent to the principal to access a target resource, where some attributes define the principal's access rights to that target resource.

As more examples, at 142, the identity service may send the access credential and the attributes to a directory service to authenticate the principal and provide the principal access to the directory service's resources. So, initially it may be that the principal tries to log into the directory service and the directory service does not recognize the identifier or the first authentication secret. The identity service authenticates the principal and sends an access credential to the directory service that authenticates the principal to the directory service and permits the directory service to map the principal to a recognized identity.

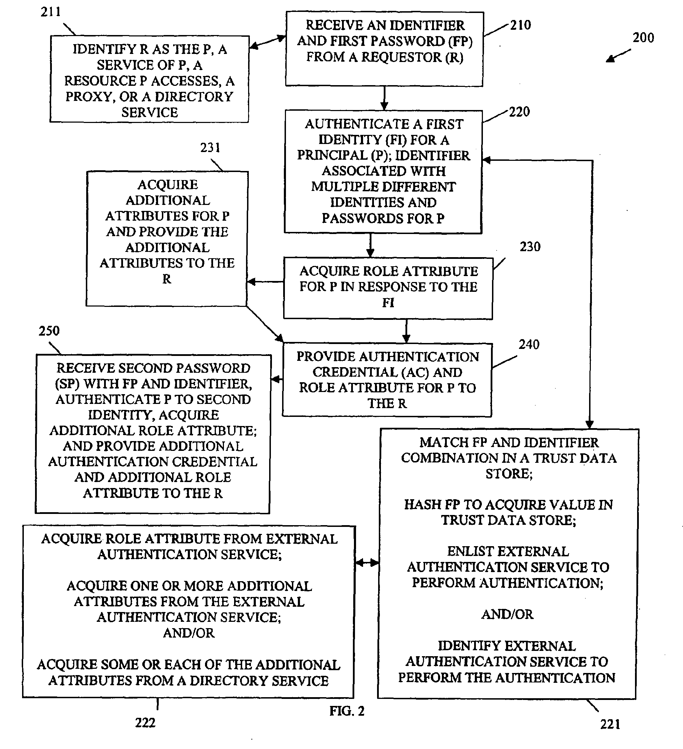

FIG. 2 is a diagram of a method 200 for resolving identities for a principal using a single identifier and one or more multiple passwords associated with the single identifier, according to an example embodiment. The method 200 (hereinafter "authentication service" is implemented in a machine-accessible and readable medium as instructions. The instructions when executed by a machine perform the processing depicted in the FIG. 2. Moreover, the authentication service is operational over a network, and the network may be wired, wireless, or a combination of wired and wireless. The processing associated with the authentication service presents an alternative perspective to the processing associated with the identity service described above with the method 100 and within the context of the FIG. 1.

At 210, the authentication service receives an identifier and a first password from a requestor. At 211, the requestor may be identified by the authentication service as a particular principal, a resource that the principal is attempting to access, a proxy acting on behalf of the principal, or a directory service. It may also be that the requestor is an identity service, such as the identity service discussed above with respect to the method 100 of the FIG. 1.

In response to the identifier and the first password, at 220, the authentication service authenticates a known principal to a first identity. The supplied identifier for the principal is associated with multiple different identities and with multiple different passwords.

At 221, the authentication service may use a variety of techniques to authenticate or establish the first identity for the principal. For example, the authentication service may match the first password and identifier combination in a trust data store. The authentication service may also hash the first password and/or identifier to acquire a value that is then looked up in the trust data store. Still further, the authentication service may enlist one or more external services to perform the authentication on its behalf. In yet another case, the authentication service may actually identify the particular external authentication service to request help from via policy or via the identifier and/or first password.

According to an embodiment, at 222, the authentication service may also use the external authentication service to perform a variety of other operations. For example, the external authentication service may supply the role attribute and supply a variety of additional attributes (discussed below with reference to the processing at 230). It may also be the case that some or each of the acquired attributes is acquired by a directory service for the first identity of the principal.

At 230, the authentication service acquires a role attribute for the principal in response to the first identity that the principal authenticated to with the supplied identifier and first password. The role attribute may be resolved by policy and may define certain other policies such as access rights and privileges for the desired or targeted resource that recognizes the role.

In an embodiment, at 231, the authentication service may also acquire additional attributes beyond just a role attribute for the first identity of the principal and supply those to the requestor, at 240.

At 240, the authentication service provides an authentication credential and at least the role attribute for the principal to the initial requesting resource. The authentication credential permits a target resource that the principal is attempting to engage in a communication session or to otherwise access to recognize and grant access to the first identity being assumed by the principal. The role attribute may in some cases be assumed by the first identity or may provide or identify specific policies and access rights for the principal when accessing the target resource. Again, it is noted that the requestor may be the principal, a directory service of the principal, the target resource or service the principal is attempting to access, an identity service, or a proxy.

In an embodiment, at 250, the authentication service may have also received a second password with the same identifier supplied back at 210. In such a case, the processing described at 220, 230, and 240 may be iterated to acquire a second identity for the principal and a second or additional role attribute (and any additional attributes associated with the second identity beyond just the additional role attribute). This second identity and additional role attribute may then also be supplied or provided to the requestor along with an additional credential associated with the second identity. In this manner, the principal may supply a single identifier and multiple different passwords. The authentication service, either independently or via the help of other services, authenticates the principal, using the single identifier, to a first identity and a second identity and provides the proper role attributes and authentication credentials for both identities.

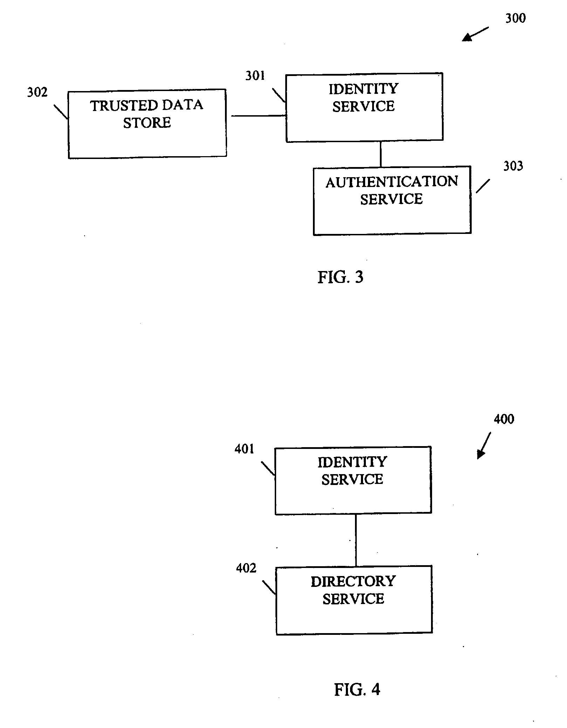

FIG. 3 is a diagram of a security access system 300, according to an example embodiment. The security access system 300 is implemented as instructions on or within a machine-accessible and readable medium. The instructions when executed by a machine perform processing depicted with respect to the methods 100 and 200 of the FIGS. 1 and 2, respectively. The security access system 300 is also operational over a network and the network may be wired, wireless, or a combination of wired and wireless.

The security access system 300 includes an identity service 301 and a trusted data store 302. In some cases, the security access system 300 may also include an authentication service 303. Each of these will now be discussed in turn.

The identity service 301 and its processing were described in detail above with reference to the methods 100 and 200 of the FIGS. 1 and 2. The identity service 301 receives a first password and an identifier from a principal. This may be received directly from the principal or indirectly from another resource or service interacting with the principal.

In response to the first password and identifier, the identity service 301 searches the trusted data store 302 to determine how to authenticate the principal. This may mean that the identifier and first password pair are associated with policies in the trusted data store 302. The policy or policies instruct the identity service 301 to perhaps contact an external authentication service 303 to perform the authentication. In other cases, the identity service 301 may find a particular match on the first password that resolves to a first identity for the principal. In still other cases, the identity service 301 may find no match on the first password but rather the identity of the external authentication service 303 or a particular policy that supplies the identity of the external authentication service 303.

According to an embodiment, the identity service 301 may also concurrently receive a second password for the same and single identifier associated with the principal. In these cases, the identity service 301 may perform similar techniques discussed herein and above to resolve and authenticate the principal to a second identity in addition to the first identity.

For each identity resolved, the identity service 301 generates or acquires a proper credential. The credential permits the principal to engage a desired or target resource and may identify specific access rights and privileges for the communication session with the target resource.

The trusted data store 302 includes a plurality of passwords or hash values associated with multiple passwords for the principal. It may also include policies and mappings to specific identities that are associated with consulting authentication services. The identity service 301 uses the trusted data store 302 to authenticate the principal to specific identities in response to the supplied first password. In some cases, the trusted data store 302 may also include attributes such as role, address, phone number, *etc.* for a particular resolved identity associated with the principal.

The identity service 301 may supply the attributes in addition to the credential for each resolved identity to a requestor. The requestor may be the principal or any other resource knowingly or unknowingly assisting the principal in authenticating to a particular identity via the identity service 301 and the trusted data store 302. In some cases, the authentication service 303 may also supply some or all of the desired or used attributes.

FIG. 4 is a diagram of another security access system 400, according to an example embodiment. The security access system 400 is implemented as instructions on or within a machine-accessible and readable medium. The instructions when executed by a machine also perform, among other things; the processing depicted with respect to the methods 100 and 200 of the FIGS. 1 and 2, respectively. The security access system 400 is also operational over a network and the network may be wired, wireless, or a combination of wired and wireless. The security access system 400 presents a different perspective to the security access system 300 described above with reference to the FIG. 3.

The security access system 400 includes an identity service 401 and a directory service 402. Each of these will now be discussed in turn.

The identity service 401 has been described in detail above with reference to the FIGS. 1-3. The identity service 401 manages multiple passwords for a single identifier of a principal. Each password corresponds to a different role that the principal may assume in a given context or particular communication session that the principal desires to engage in with a target resource. The identity service 401 uses the directory service 402 to resolve the particular roles for the principal for a given password being supplied by or on behalf of the principal.

In some embodiments, the identity service 401 also injects or sets attributes for the principal in a given communication session for the resolved role. The identity service 401 may set the particular role, other attributes, and access rights for the principal during any given communication session that the principal engages in.

Moreover, in some cases, the directory service 402 is in a local and secure environment with the identity service 401. In this manner, the identity service 401 and the directory service 402 communicate with one another securely and locally. The directory service 402 may be consulted for a variety of purposes, to authenticate the supplied password, to supply attributes, to resolve a role for the principal, to accept the credential on behalf of the principal, *etc.*

## Claims

1. A computer-implemented method, comprising:
receiving (110) an identifier and a first authentication secret from a principal, to authenticate the principal for a communication session with a given resource, and using the first authentication secret and the identifier to search a trusted data store, that includes multiple authentication secrets for a principal, each including a password, biometric data, a digital certificate, or a digital signature, to find a match with the first authentication secret and to identify an external authentication service via the identifier;
supplying the external authentication service with the first authentication secret and with an entirely different identifier for the principal than the one initially received,
validating (121) the entirely different identifier with the first authentication secret;
acquiring (122,130) one or more attributes in response to their association with the validated first authentication secret, wherein the one or more attributes include roles for the principal to assume and define access rights and privileges for the principal during a communication session of the principal with a given resource;
and
transmitting (140) an access credential along with the one or more attributes in response to the validated first authentication secret, the access credential authenticating the principal to access the given resource for a particular role having particular access rights and privileges during the communication session.

2. The method of claim 1, wherein receiving (110) further includes, receiving the first authentication secret from a browser session (111) that was redirected when the principal attempted to access a target service via a browser that the principal interacts with.

3. The method of claim 1, wherein receiving (110) further includes receiving the first authentication secret from a directory service (113) that the principal attempts to interact with.

4. The method of claim 1, wherein receiving (110) further includes identifying the first authentication secret as a password of the principal (112), and wherein the password is defined with other passwords associated with the principal in the multiple authentication secrets for the principal.

5. The method of claim 1, wherein validating (120) further includes:
contacting (121) the authentication service to validate the first authentication secret; and
receiving (122) a validated first authentication secret for the principal from the authentication service.

6. The method of claim 5, wherein acquiring (130) further includes receiving some or each of the one or more attributes from the authentication service.

7. The method of claim 1, wherein transmitting (140) further includes sending the access credential and the one or more attributes to a directory service (142) to authenticate and provide access rights to the principal that is attempting to access one or more resources of the directory service.

8. A system (300), comprising:
a trusted data store (302), that includes multiple authentication secrets for a principal, each including a password, biometric data a digital certificate, or a digital signature;
an identity service (301), wherein the identity service is adapted to receive an identifier and a first authentication secret from a principal, and to use the first authentication secret and the identifier to search the trusted data store to find a match with the first authentication secret and to identify an external authentication service (330) via the identifier;
the authentication service (330) being adapted to be consulted by the identity service (301) to authenticate the principal and establish the first identity, wherein the identity service is adapted to supply the authentication service with the first authentication secret and with an entirely different identifier for the principal than the one initially received, and wherein the authentication service is further adapted to validate (121) the entirely different identifier with the first authentication secret;
wherein the identity service is adapted to acquire (122,130) one or more attributes in response to their association with the validated first authentication secret, wherein the one or more attributes include roles for the principal to assume and define access rights and privileges for the principal during a communication session of the principal with a given resource; and
wherein the identity service is adapted to transmit (140) an access credential along with the one or more attributes in response to the validated first authentication secret, the access credential authenticating the principal to access the given resource for a particular role having particular access rights and privileges during the communication session.

9. The system of claim 8, wherein the authentication service (303) is adapted to provide one or more attributes to be associated with the credential and to be sent with the credential from the identity service (301) to the principal.

10. The system of claim 9, wherein the identity service (301) is adapted to concurrently receive (250) a second authentication secret from the principal with the first authentication secret and the identifier, and wherein the identity service is adapted to use the trusted data store to supply an additional credential for the second identity to the principal when validated.

11. The system of claim 10, wherein the identity service (301) is adapted to use a policy to assist in determining how to authenticate the principal in response to the first authentication secret and the match of the first authentication secret within the trusted data store.

12. A computer program which when executing on a computer performs the method of any one of claims 1 to 7.

13. The computer program of claim 12, when stored on a computer readable medium.

## Patentansprüche

1. Computer-implementiertes Verfahren, umfassend:
Empfangen (110) eines Bezeichners und eines ersten Authentisierungsgeheimnisses von einem Prinzipal, um den Prinzipal für eine Kommunikationssitzung mit einer vorgegebenen Ressource zu authentisieren, und Verwenden des ersten Authentisierungsgeheimnisses und des Bezeichners, um einen vertrauenswürdigen Datenspeicher zu durchsuchen, der mehrere Authentisierungsgeheimnisse für einen Prinzipal, jedes enthaltend ein Passwort, biometrische Daten, ein digitales Zertifikat oder eine digitale Signatur, enthält, um eine Übereinstimmung mit dem ersten Authentisierungsgeheimnis zu finden und einen externen Authentisierungsdienst über den Bezeichner zu bestimmen;
Versorgen des externen Authentisierungsdienstes mit dem ersten Authentisierungsgeheimnis und mit einem Bezeichner für den Prinzipal, der von dem anfänglich empfangenen vollständig verschieden ist,
Validieren (121) des vollständig verschiedenen Bezeichners mit dem ersten Authentisierungsgeheimnis;
Erlangen (122, 130) von ein oder mehreren Attributen in Antwort auf deren Zuordnung zu dem validierten ersten Authentisierungsgeheimnis, wobei die ein oder mehreren Attribute Rollen für den Prinzipal enthalten, um Zugriffsrechte und -privilegien für den Prinzipal während einer Kommunikationssitzung des Prinzipals mit einer vorgegebenen Ressource anzunehmen und zu definieren; und
Übertragen (140) eines Zugriffsberechtigungsnachweises zusammen mit den einen oder mehreren Attributen in Antwort auf das validierte erste Authentisierungsgeheimnis, wobei der Zugriffsberechtigungsnachweis den Prinzipal derart authentisiert, dass er während der Kommunikationssitzung auf die vorgegebene Ressource mit einer bestimmten Rolle zugreift, die bestimmte Zugriffsrechte und -privilegien aufweist.

2. Verfahren nach Anspruch 1, wobei das Empfangen (110) ferner Empfangen des ersten Authentisierungsgeheimnisses von einer Browsersitzung (111) enthält, die umgeleitet wurde, als der Prinzipal versuchte, über einen Browser, mit dem der Prinzipal interagiert, auf einen Zieldienst zuzugreifen.

3. Verfahren nach Anspruch 1, wobei das Empfangen (110) ferner Empfangen des ersten Authentisierungsgeheimnisses von einem Verzeichnisdienst (113) enthält, mit dem der Prinzipal versucht, zu interagieren.

4. Verfahren nach Anspruch 1, wobei das Empfangen (110) ferner Festlegen des ersten Authentisierungsgeheimnisses als ein Passwort des Prinzipals (112) enthält und wobei das Passwort mit anderen Passwörtern definiert wird, die dem Prinzipal in den mehreren Authentisierungsgeheimnissen für den Prinzipal zugeordnet sind.

5. Verfahren nach Anspruch 1, wobei das Validieren (120) ferner enthält:
Kontaktieren (121) des Authentisierungsdienstes, um das erste Authentisierungsgeheimnis zu validieren; und
Empfangen (122) eines validierten ersten Authentisierungsgeheimnisses für den Prinzipal von dem Authentisierungsdienst.

6. Verfahren nach Anspruch 5, wobei das Erlangen (130) ferner Empfangen von einigen oder jedem der einen oder mehreren Attribute von dem Authentisierungsdienst enthält.

7. Verfahren nach Anspruch 1, wobei das Übertragen (140) ferner Senden des Zugriffsberechtigungsnachweises und der ein oder mehreren Attribute an einen Verzeichnisdienst (142) enthält, um Zugriffsrechte an den Prinzipal, der versucht, auf ein oder mehrere Ressourcen des Verzeichnisdienstes zuzugreifen, zu authentisieren und bereitzustellen.

8. System (300) umfassend:
einen vertrauenswürdigen Datenspeicher (302), der mehrere Authentisierungsgeheimnisse für einen Prinzipal, jedes enthaltend ein Passwort, biometrische Daten, ein digitales Zertifikat oder eine digitale Signatur, enthält;
einen Identitätsdienst (301), wobei der Identitätsdienst dazu ausgelegt ist, einen Bezeichner und ein erstes Authentisierungsgeheimnis von einem Prinzipal zu empfangen und das erste Authentisierungsgeheimnis und den Bezeichner derart zu verwenden, den vertrauenswürdigen Datenspeicher zu durchsuchen, um eine Übereinstimmung mit dem ersten Authentisierungsgeheimnis zu finden und einen externen Authentisierungsdienst (330) über den Bezeichner zu bestimmen;
wobei der Authentisierungsdienst (330) dazu ausgelegt ist, durch den Identitätsdienst (301) konsultiert zu werden, um den Prinzipal zu authentisieren und die erste Identität herzustellen, wobei der Identitätsdienst dazu ausgelegt ist, den Authentisierungsdienst mit dem ersten Authentisierungsgeheimnis und mit einem Bezeichner für den Prinzipal zu versorgen, der von dem anfänglich empfangenen vollständig verschieden ist, und wobei der Authentisierungsdienst ferner dazu ausgelegt ist, den vollständig verschiedenen Bezeichner mit dem ersten Authentisierungsgeheimnis zu validieren (121);
wobei der Identitätsdienst dazu ausgelegt ist, ein oder mehrere Attribute in Antwort auf deren Zuordnung zu dem validierten ersten Authentisierungsgeheimnis zu erlangen (122, 130), wobei die einen oder mehreren Attribute Rollen für den Prinzipal enthalten, um Zugriffsrechte und - privilegien für den Prinzipal während einer Kommunikationssitzung des Prinzipals mit einer vorgegebenen Ressource anzunehmen und zu definieren; und
wobei der Identitätsdienst dazu ausgelegt ist, einen Zugriffsberechtigungsnachweis zusammen mit den einen oder mehreren Attributen in Antwort auf das validierte erste Authentisierungsgeheimnis zu übertragen, wobei der Zugriffsberechtigungsnachweis den Prinzipal derart authentisiert, dass er während der Kommunikationssitzung auf die vorgegebene Ressource mit einer bestimmten Rolle zugreift, die bestimmte Zugriffsrechte und - privilegien aufweist.

9. System nach Anspruch 8, wobei der Authentisierungsdienst (303) dazu ausgelegt ist, ein oder mehrere Attribute vorzusehen, die mit dem Berechtigungsnachweis zuzuordnen sind und die mit dem Berechtigungsnachweis von dem Identitätsdienst (301) an den Prinzipal zu senden sind.

10. System nach Anspruch 9, wobei der Identitätsdienst (301) dazu ausgelegt ist, ein zweites Authentisierungsgeheimnis von dem Prinzipal gleichzeitig mit dem ersten Authentisierungsgeheimnis und dem Bezeichner zu empfangen, und wobei der Identitätsdienst dazu ausgelegt ist, den vertrauenswürdigen Datenspeicher zu verwenden, um einen zusätzlichen Berechtigungsnachweis für die zweite Identität des Prinzipals zuzuführen, wenn er validiert ist.

11. System nach Anspruch 10, wobei der Identitätsdienst (301) dazu ausgelegt ist, eine Richtlinie zu verwenden, um beim Bestimmen zu unterstützen, wie der Prinzipal in Antwort auf das erste Authentisierungsgeheimnis und die Übereinstimmung des ersten Authentisierungsgeheimnisses in dem vertrauenswürdigen Datenspeicher zu authentisieren ist.

12. Computerprogramm, welches, wenn es auf einem Computer ausgeführt wird, das Verfahren nach einem der Ansprüche 1 bis 7 ausführt.

13. Computerprogramm nach Anspruch 12, wenn es auf einem computerlesbaren Medium gespeichert ist.

## Revendications

1. Procédé mis en oeuvre par ordinateur, comprenant :
recevoir (110) un identifiant et un premier secret d'authentification provenant d'un mandant, pour authentifier le mandant en vue d'une session de communication avec une ressource donnée, et utiliser le premier secret d'authentification et l'identifiant pour chercher dans un magasin de données sécurisé, qui inclut de plusieurs secrets d'authentification pour un mandant, chacun incluant un mot de passe, des données biométriques, un certificat numérique ou une signature numérique, pour trouver une correspondance avec le premier secret d'authentification et pour identifier un service d'authentification externe via l'identifiant ;
fournir le service d'authentification externe avec le premier secret d'authentification et avec un identifiant pour le mandant entièrement différent de celui initialement reçu,
valider (121) l'identifiant entièrement différent avec le premier secret d'authentification ;
acquérir (122, 130) un ou plusieurs attributs en réponse de leur association avec le premier secret d'authentification validé, le ou les attributs incluant des rôles que le mandant doit prendre et définissant des droits d'accès et des privilèges pour le mandant pendant une session de communication du mandant avec une ressource donnée ; et
transmettre (140) un justificatif d'accès ainsi que le ou les attributs en réponse au premier secret d'authentification validé, le justificatif d'accès authentifiant le mandant pour accéder à la ressource donnée pour un rôle particulier ayant des droits d'accès et des privilèges particuliers pendant la session de communication.

2. Procédé selon la revendication 1, dans lequel la réception (110) inclut en outre la réception du premier secret d'authentification à partir d'une session de navigateur (111) qui a été redirigée lorsque le mandant a tenté d'accéder à un service cible via un navigateur avec lequel le mandant interagit.

3. Procédé selon la revendication 1, dans lequel la réception (110) inclut en outre la réception du premier secret d'authentification provenant d'un service d'annuaire (113) avec lequel le mandant tente d'interagir.

4. Procédé selon la revendication 1, dans lequel la réception (110) inclut en outre l'identification du premier secret d'authentification comme un mot de passe du mandant (112), et dans lequel le mot de passe est défini avec d'autres mots de passe associés au mandant dans les plusieurs secrets d'authentification pour le mandant.

5. Procédé selon la revendication 1, dans lequel la validation (120) inclut en outre :
contacter (121) le service d'authentification pour valider le premier secret d'authentification ; et
recevoir (122) du service d'authentification un premier secret d'authentification validé pour le mandant.

6. Procédé selon la revendication 5, dans lequel l'acquisition (130) inclut en outre la réception du service d'authentification de certains ou de chacun du ou des attributs.

7. Procédé selon la revendication 1, dans lequel la transmission (140) inclut en outre l'envoi du justificatif d'accès et du ou des attributs à un service d'annuaire (142) pour authentifier et donner des droits d'accès au mandant qui tente d'accéder à une ou plusieurs ressources du service d'annuaire.

8. Système (300), comprenant :
un magasin de données sécurisé (302), qui inclut plusieurs secrets d'authentification pour un mandant, chacun incluant un mot de passe, des données biométriques, un certificat numérique ou une signature numérique ;
un service d'identité (301), dans lequel le service d'identité est adapté pour recevoir un identifiant et un premier secret d'authentification provenant d'un mandant, et pour utiliser le premier secret d'authentification et l'identifiant pour rechercher dans le magasin de données sécurisé pour trouver une correspondance avec le premier secret d'authentification et pour identifier un service d'authentification externe (330) via l'identifiant ;
le service d'authentification (330) étant adapté pour être consulté par le service d'identité (301) pour authentifier le mandant et établir la première identité, dans lequel le service d'identité est adapté pour fournir au service d'authentification le premier secret d'authentification et un identifiant pour le mandant entièrement différent de celui initialement reçu, et dans lequel le service d'authentification est également adapté pour valider (121) l'identifiant entièrement différent avec le premier secret d'authentification ;
dans lequel le service d'identité est adapté pour acquérir (122, 130) un ou plusieurs attributs en réponse à leur association avec le premier secret d'authentification validé, dans lequel le ou les attributs incluent des rôles que le mandant doit prendre et définissent des droits d'accès et des privilèges pour le mandants pendant une session de communication du mandant avec une ressource donnée ; et
dans lequel le service d'identité est adapté pour transmettre (140) un justificatif d'accès ainsi que le ou les attributs en réponse au premier secret d'authentification validé, le justificatif d'accès authentifiant le mandant pour accéder à la ressource donnée pour un rôle particulier ayant des droits d'accès et des privilèges particuliers pendant la session de communication.

9. Système selon la revendication 8, dans lequel le service d'authentification (303) est adapté pour fournir un ou plusieurs attributs à associer au justificatif et à envoyer avec le justificatif du service d'identité (301) au mandant.

10. Système selon la revendication 9, dans lequel le service d'identité (301) est adapté pour recevoir simultanément (250) un second secret d'authentification provenant du mandant avec le premier secret d'authentification et l'identifiant, et dans lequel le service d'identité est adapté pour utiliser le magasin de données sécurisé pour fournir au mandant un justificatif supplémentaire pour la seconde identité lorsqu'elle est validée.

11. Système selon la revendication 10, dans lequel le service d'identité (301) est adapté pour utiliser une règle pour aider à déterminer la manière d'authentifier le mandant en réponse au premier secret d'authentification et la correspondance du premier secret d'authentification dans le magasin de données sécurisé.

12. Programme informatique qui, lorsqu'il s'exécute sur un ordinateur, met en oeuvre le procédé selon l'une quelconque des revendications 1 à 7.

13. Programme informatique selon la revendication 12, lorsque stocké sur un média lisible par ordinateur.
